# EUROPÄISCHE PATENTSCHRIFT

(11) **EP 1 318 152 B1**
(45) Veröffentlichungstag und Bekanntmachung des Hinweises auf die Patenterteilung: **19.09.2007**
(21) Anmeldenummer: 02023107.2
(22) Anmeldetag: 15.10.2002
(51) Int. Cl.: C07F 7/10, C07F 9/54, B01J 31/00, C08G 18/00, C09D 175/00

(54) **Katalysatoren und Verfahren zur Herstellung von Isocyanuratgruppen enthaltenden Polyisocyanaten**
Catalysts and process for preparing polyisocyanates containing isocyanurate groups
Catalyseurs et procédé de préparation de polyisocyanates contenant des groupes isocyanurates

(30) Priorität: 07.12.2001 DE 10160305
(43) Veröffentlichungstag der Anmeldung: 11.06.2003
(73) Patentinhaber: Degussa GmbH, 40474 Düsseldorf (DE)
(72) Erfinder: Kohlstruk, Stephan, 48249 Dülmen (DE); Poersch, Waldtraud, 44628 Herne (DE); Ewald, Michael, 45768 Marl (DE); Windmüller, Manuela, 45768 Marl (DE)

(56) Entgegenhaltungen:
- EP-A- 0 057 653
- EP-A- 0 339 396
- EP-A- 0 379 914
- EP-A- 0 413 465
- EP-A- 0 571 867
- EP-A- 0 798 299
- EP-A- 0 896 009
- EP-A- 0 962 454
- US-A- 4 324 879
- US-A- 4 412 073
- US-A- 4 537 961
- US-A- 4 675 401
- US-A- 4 697 014
- US-A- 4 771 117
- US-A- 5 798 431

## Beschreibung

Die vorliegende Erfindung betrifft Katalysatoren und ein Verfahren zur Herstellung von Isocyanuratgruppen enthaltenden Polyisocyanaten, damit hergestellte Polyisocyanate und deren Verwendung.

Für hochwertige Ein- und Zweikomponenten Polyurethanlacke mit hoher Licht- und Wetterbeständigkeit werden als Isocyanatkomponente insbesondere Isocyanurat- und Uretdiongruppen enthaltende Polyisocyanatmischungen eingesetzt. Die Oligo- bzw. Polymerisierung von Isocyanaten zu derartigen Polyisocyanaten ist seit langem bekannt. Eine Reihe von Herstellverfahren wurde entwickelt, die sich in bezug auf die Katalysatorauswahl, in bezug auf die einzusetzenden organischen Isocyanate oder auch in Hinblick auf verfahrenstechnische Parameter voneinander unterscheiden (vgl. z. B. GB-PS 1391066, EP 82 987, DE 39 02 078, EP 339 396, EP 224 165; s. auch H.J. Laas et al. in J. Prakt. Chem. 336 (1994), 185ff.).

Zur Trimerisierung geeignete Isocyanate, z. B. aromatische, cycloaliphatische und aliphatische di- und höherwertige Polyisocyanate, können nach verschiedenartigen Verfahren hergestellt werden (Annalen der Chemie 562 (1949), Seiten 75ff). Technisch insbesondere bewährt hat sich die Herstellung durch Phosgenierung von organischen Polyaminen zu den entsprechenden Polycarbaminsäurechloriden und deren thermische Spaltung in organische Polyisocyanate und Chlorwasserstoff. Alternativ können organische Polyisocyanate auch ohne die Verwendung von Phosgen, d. h. nach phosgenfreien Verfahren, hergestellt werden. Nach Angaben der EP 126 299, EP 126 300 und EP 355 443 beispielsweise können (cyclo)aliphatische Diisocyanate - wie 1,6-Hexamethylendiisocyanat (HDI) und/oder isomere aliphatische Diisocyanate mit 6 Kohlenstoffatomen im Alkylenrest und 1-Isocyanato-3-isocyanato-methyl-3,5,5-trimethyl-cyclohexan (Isophorondiisocyanat bzw. IPDI) - hergestellt werden durch Umsetzung der zugrundeliegenden (cyclo)aliphatischen Diamine mit Harnstoff und Alkoholen zu (cyclo)aliphatischen Biscarbaminsäureestern und deren thermische Spaltung in die entsprechenden Diisocyanate und Alkohole.

Zur Oligomerisierung lässt man die (cyclo)aliphatischen Diisocyanate in Gegenwart des Katalysators, gegebenenfalls unter Verwendung von Lösungsmitteln und/oder Hilfsstoffen, bis zum Erreichen des gewünschten Umsatzes reagieren. Man spricht in diesem Zusammenhang auch von partieller Trimerisierung, da der angestrebte Umsatz in der Regel deutlich unterhalb von 100 % liegt. Danach wird die Reaktion durch Desaktivierung des Katalysators abgebrochen und das überschüssige monomere Diisocyanat üblicherweise abgetrennt, in der Regel duch Kurzweg- oder Dünnschichtdestillation. Die Desaktivierung erfolgt thermisch oder durch Zusatz eines Katalysatorinhibitors. Geeignet sind Säuren wie beispielsweise p-Toluolsulfonsäure oder Bis(2-Ethylhexyl)phosphat, Alkylierungsmittel oder auch Acylierungsreagenzien.

Als Katalysatoren für die Trimerisierung von Isocyanaten zu den angestrebten Isocyanurat- und ggf. Uretdiongruppen aufweisenden Polyisocyanaten können beispielsweise tertiäre Amine, Phosphine, Alkaliphenolate, Aminosilane, quartäre Ammoniumhydroxide oder quartäre Ammoniumcarbonate eingesetzt werden. Gut geeignete Oligomerisierungskatalysatoren sind auch Hydroxide, Halogenide oder Carboxylate von Hydroxyalkylammonium-Ionen (vgl. z. B. EP 351 873, EP 798 299, US 5 290 902), Alkalimetallsalze sowie Zinn-, Zink- bzw. Bleisalze von Alkylcarbonsäuren. In Abhängigkeit vom Kontakt ist auch die Verwendung von diversen Co-Katalysatoren wie z. B. OHfunktionalisierten Verbindungen oder Mannichbasen aus sekundären Aminen und Aldehyden bzw. Ketonen möglich.

Je nach verwendetem Katalysatortyp und Reaktionstemperatur erhält man Polyisocyanate mit unterschiedlichen Anteilen an Isocyanurat- bzw. Uretdiongruppen. Die Produkte sind meist klare, aber in Abhängigkeit vom Katalysatortyp, der Diisocyanatqualität, der Reaktionstemperatur und der Reaktionsfahrweise mehr oder weniger stark gelbgefärbte Produkte. Für die Herstellung hochwertiger Polyurethanlacke sind jedoch Produkte mit einer möglichst niedrigen Farbzahl erwünscht.

Die Auswahl eines geeigneten Katalysators kann nach unterschiedlichen Kriterien erfolgen.

Besonders vorteilhaft im Hinblick auf die Trimerisierung von Isocyanaten im technischen Maßstab ist zum Beispiel der Einsatz von quartärneren Hydroxyalkylammoniumcarboxylaten als Oligomerisierungskatalysatoren. Diese Kontakte vom Cholin-Typ sind thermisch labil. Es ist unnötig, die Trimerisierung bei Erreichen des gewünschten Umsatzes durch Zusatz potentiell qualitätsmindernder Katalysatorinhibitoren abzustoppen. Statt dessen erlaubt die gezielte thermische Deaktivierung eine optimale Prozeßkontrolle. Vorteile bietet die Thermolabilität auch unter dem Gesichtspunkt der Prozeßsicherheit. Ein unkontrolliertes "Durchgehen" der Reaktion ist ausgeschlossen, sofern die zudosierte Katalysatormenge das übliche Maß nicht um ein Vielfaches übersteigt.

Als vorteilhaft für die Herstellung von Isocyanuratgruppen enthaltenden Polyisocyanaten hoher Farbgüte haben sich Aminosilylverbindungen erwiesen (US 4 412 073, US 4 537 961, US 4 675 401, US 4 697 014). Darüber hinaus erlauben sie eine sichere Reaktionskontrolle und lassen sich mit Wasser oder Alkoholen leicht deaktivieren.

Die Klasse der Aminosilylkatalysatoren ist allerdings mit dem Nachteil einer geringen katalytischen Aktivität behaftet, so dass wirtschaftliche Raum-Zeit-Ausbeuten nur bei Einsatz verhältnismäßig großer Katalysatormengen realisiert werden können. Dies ist jedoch mit weiteren Nachteilen verbunden. Zum einen stellt es einen ernst zu nehmenden Kostenfaktor dar, denn der Kontakt wird durch die Deaktivierung irreversibel zerstört und kann nicht nutzbringend in den Prozeß zurückgeführt werden. Zum anderen gelangen zwangsläufig größere Mengen des deaktivierten Katalysators in das Produkt mit ggf. negativen Konsequenzen für dessen Eigenschaftsprofil.

Es gibt daher einen Bedarf für Si-basierende Katalysatoren zur Herstellung von Isocyanuratgruppen enthaltenden Polyisocyanaten, die nicht die Nachteile der Aminosilylverbindungen des Stands der Technik aufweisen.

Der vorliegenden Erfindung lag demnach die Aufgabe zugrunde, neue Si-basierende Katalysatoren zur Herstellung von Isocyanuratgruppen enthaltenden Polyisocyanaten zur Verfügung zu stellen, die sich einerseits durch eine signifkant gesteigerte Aktivität auszeichen, andererseits aber dennoch eine sichere Reaktionskontrolle und Prozeßsicherheit gestatten.

Gegenstand der Erfindung ist ein Katalysator für die Trimerisierung von Isocyanaten, der allgemeinen Formel (I) 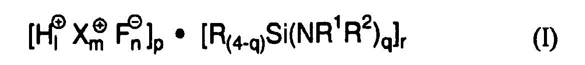 wobei
n = m + 1 mit 1 ≥ m/n > 0, bevorzugt 1 ≥ m/n ≥ 0.1, besonders bevorzugt 1 ≥ m/n ≥ 0.25 ist, und 1 ≥ 0 ist,
p > 0 und r > 0 sind und das Verhältnis p/r einen beliebigen Wert, bevorzugt zwischen 0.01 und 100, besonders bevorzugt zwischen 0.1 und 10 annehmen kann,
q = 1 oder 2 ist,
R für einen gesättigten oder ungesättigten, linearen oder verzweigten aliphatischen, cycloaliphatischen Rest oder Aryl-, Aralkyl oder Alkylarylrest mit 1 bis 16 C-Atomen steht und zwei Reste R über eine Alkylenbrücke miteinander verknüpft sein können,
R¹ für R, SiR₃ oder einen Amidrest der Formel (II) 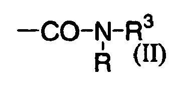 steht,
R² gleich R oder H ist, wobei - sofern R¹ kein Amidrest ist - R² mit R¹ über eine Alkylenbrücke miteiander vernüpft sein kann,
R³ gleich R oder SiR₃ ist und
X^{⊕} für ein organisches Onium-Kation der allgemeinen Formel (III) 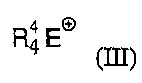 steht, wobei
E gleich Stickstoff oder Phosphor ist und
R⁴ für gleich oder verschiedene, linearen verzweigte aliphatische, cycloaliphatische oder araliphatische Reste mit 1 bis 20 C-Atomen steht.

Gegenstand der Erfindung ist auch ein Verfahren zur Herstellung einer Verbindung der allgemeinen Formel (I) 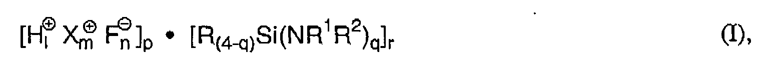 wobei
n = m + 1 mit 1 ≥ m/n > 0, bevorzugt 1 ≥ m/n ≥ 0.1, besonders bevorzugt 1 ≥ m/n ≥ 0.25 ist, und 1 ≥ 0 ist,
p > 0 und r > 0 sind und das Verhältnis p/r einen beliebigen Wert, bevorzugt zwischen 0.01 und 100, besonders bevorzugt zwischen 0.1 und 10 annehmen kann,
q = 1 oder 2 ist,

R gleichzeitig oder unabhängig von einander für einen gesättigten oder ungesättigten, lineare oder verzweigten aliphatischen oder cycloaliphatischen Rest oder Aryl-, Aralkyl oder Alkylarylrest mit 1 bis 16 C-Atomen steht und zwei Reste R über eine Alkylenbrücke miteinander verknüpft sein können,
R¹ für R, SiR₃ oder einen Amidrest der Formel (II) 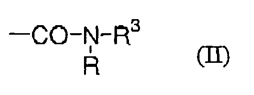 steht,
R² gleich R oder H ist, wobei - sofern R¹ kein Amidrest ist - R² mit R¹ über eine Alkylenbrücke miteiander vernüpft sein kann,
R³ gleich R oder SiR₃ ist und
X^{⊕} für ein organisches Onium-Kation der allgemeinen Formel (III) 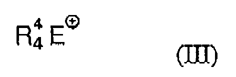 steht, wobei
E gleich Stickstoff oder Phosphor ist und
R⁴ für gleiche oder verschiedene,lineare oder verzweigte aliphatische, cycloaliphatische oder araliphatische Reste mit 1 bis 20 C-Atomen steht, gegebenenfalls in Gegenwart eines Solvatationsmittels, bei Temperaturen von - 20 bis 200 °C. Dabei wird eine geeignete organische Siliziumverbindung mit mindestens einer Si-N-Bindung sowie eine geeignete Fluoridquelle, gegebenenfalls in Gegenwart eines Solvatationsmittels, bei einer Temperatur von -20°C bis 200°C miteinander zur Reaktion gebracht.

Zur Herstellung der erfindungsgemäßen Verbindungen und Katalysatoren geeignete organische Siliziumverbindungen sind Aminosilane, Silylharnstoffe oder Silazane oder auch Mischungen derselben, bespielsweise Methylaminotrimethylsilan, Diemthylaminotrimethylsilan, Dibutylaminotrimethylsilan, Diethylaminodimethylphenylsilan, Bis(dimethyamino)dimethylsilan, Bis(diethylamino)dimethylsilan, Bis(dibutylamino)dimethylsilan, Bis(dimethylamino)methylphenylsilan, N-Methyl-N-trimethylsilyl-N'-methyl-N'-butylharnstoff, N-Trimethylsilyl-N-methyl-N',N'-dimethylharnstoff, N-Trimethylsilyl-N-ethyl-N',N' dimethylharnstoff, N-Trimethylsilyl-N-butyl-N'-butyl-N'-trimethylsilylharnstoff, Trimethylsilylpyrrolidin, Trimethlsilylmorpholin, Trimethylsilylpiperidin, Trimethylsilylpiparazin, Hexamethyldisilazan, Heptamethyldisilazan, 1,3-Diethyl-1,1,3,3-tetramethyldisilazan, Hexaethyldisilazan und 1,3-Diphenyl-1,1,3,3-tetramethyldisilazan.

Zur Herstellung der erfindungsgemäßen Verbindungen und Katalysatoren geeignete Fluoridquellen sind.quarternäre Ammonium- bzw. Phosphoniumfluoride, beispielsweise Tetrabutyl-, Tetraethyl-, Tetraoctyl-, Tetraphenyl-, Tributyltetradecyl-, Trioctylmethyl-, Benzyltrimethyl-, Benzyltriethylammoniumfluorid bzw. Tetrabutyl-, Tetraethyl-, Tetraoctyl-, Tetraphenyl-, Tributyltetradecyl-, Trioctylmethyl-, Benzyltrimethyl- oder Benzyltriethylphosphoniumfluorid, oder auch die entsprechenden quarternären Ammonium- bzw. Phosphoniumhydrogenpolyfluoride. Letztere sind zum Teil kommerziell verfügbar oder können in einfacher Weise und in beliebiger Stöchiometrie durch Abmischen von Ammonium- bzw. Phosphoniumfluoriden mit HF erhalten werden. Dabei kann das HF in reiner Form oder auch als Lösung in organsichen Lösemitteln zum Einsatz gelangen. Alternativ bieten sich kommerziell erhältliche HF-Aminkomplexe als geeignete HF-Quelle an. Darüber hinaus sind Hydrogenpolyfluoride durch Ionenaustausch in Gegenwart von Kaliumhydrogenfluorid zugänglich (s. D.Landini, H.Molinari, M.Penso, A.Rampoldi, Synthesis 1998, 953-955). Die einfachen quarternären Ammonium- und Phosphoniumfluoride sind zum Teil kommerziell verfügbar. Andernfalls lassen sie sich leicht durch Halogenaustausch aus den zugrunde liegenden Halogeniden erhalten (s. S.Dermeik, Y.Sasson, J. Org. Chem. 1989, 54, 4827-4829).

Die Herstellung der erfindungsgemäßen Verbindungen und Katalysatoren kann "in situ" erfolgen, d.h. der Katalysator wird in der Isocyanatmatrix erzeugt, deren Trimerisierung durchgeführt werden soll. Dazu werden die zur Ausbildung des Katalysators notwendigen Komponenten unabhängig voneinander dem entsprechenden Isocyanat zugemischt. Alternativ können die Katalysatorkomponenten zunächst in Substanz bzw. in einem Lösemittel miteinander zur Reaktion gebracht und der Kontakt auf diese Weise vorgefertigt werden.

Gegenstand der Erfindung ist auch die Verwendung der erfindungsgemäßen Verbindungen und Katalysatoren zur Trimerisierung von Mono-, Di- oder Polyisocyanaten.

Gegenstand der Erfindung ist weiterhin ein Verfahren zur Herstellung von Isocyanuratgruppen enthaltenden Polyisocyanaten durch katalytisch induzierte Trimerisierung organischer Mono-, Di- oder Polyisocyanate, wobei als Trimerisierungskatalysatoren erfindungsgemäße Kontakte der allgemeinen Formel (I) zum Einsatz gelangen.

Zur Herstellung der Polyisocyanate können alle bekannten aliphatischen, cycloaliphatischen, araliphatischen sowie aromatischen Mono-, Di- sowie Polyisocyanate eines NCO-Gehaltes von weniger als 70 Gewichtsprozent in reiner Form oder als beliebige Mischungen untereinander verwendet werden. Beispielhaft seien aufgeführt: Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate (z. B. Hexamethylendiisocyanat (HDI) oder 1,5-Diisocyanato-2-methylpentan (MPDI)), Heptandiisocyanate, Octandiisocyanate, Nonandiisocyanate (z. B. 1,6-Diisocyanato-2,4,4-trimethylhexan und 1,6-Diisocyanato-2,2,4-trimethylhexan (TMDI)), Nonantriisocyanate (z. B. 4-Isocyanatomethyl-1,8-octandiisocyanat (TIN), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo-[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI). Die Aufzählung versteht sich inklusive aller Regio- und Stereoisomeren der beispielhaft benannten Isocyanate. Bevorzugt werden HDI, IPDI, MPDI, TMDI , 1,3- und 1,4- H₆-XDI, NBDI sowie Mischungen aus HDI und IPDI eingesetzt.

Auch Monoisocyanate können in Gegenwart der erfindungsgemäßen Katalysatoren in Isocyanurate überführt werden, zum Beispiel Ethylisocyanat, Cyclohexylisocyanat, Phenylisocyanat, Tolylisocyanat, Benzylisocyanat sowie alle Regio- und Stereoisomeren der nachstehend benannten Verbindungen: Propylisocyanate, Hexylisocyanate, Octylisocyanate und Methoxypropylisocyanat.

Für das erfindungsgemäße Verfahren ist es unwesentlich, über welchen Syntheseweg das eingesetzte Isocyanat hergestellt wurde, d.h mit oder ohne Verwendung von Phosgen. Es sei jedoch darauf hingewiesen, dass die zur Erreichung eines wunschgemäßen NCO-Gehaltes notwendige Katalysatormenge auch von der Qualität des Mono-, Di- oder Polyisocyanats abhängt. Erfahrungsgemäß macht ein ansteigender Gehalt des Isocyanats an hydrolysierbaren Chlorverbindungen eine Erhöhung der Katalysatormenge erforderlich, so dass ein inhibitiver Effekt des hydrolysierbaren Chlors auf den Kontakt angenommen werden kann.

Ebenso wie Aminosilylverbindungen können auch verschiedene Fluoriddonatoren, unter ihnen Ammonium- und Phosphoniumfluoride, die Trimerisierung von Isocyanaten induzieren (s. Y.Nambu, T.Endo, J. Org. Chem. 1993, 58, 1932-1934; EP 896 009). Die aus Umsetzung dieser beiden Spezies hervorgehenden erfindungsgemäßen Katalysatoren weisen jedoch eine höhere Trimerisierungsaktivität auf. Sie können chemisch oder ggf. auch thermisch deaktiviert werden.

Es ist zur Herstellung der Isocyanuratgruppen enthaltenden Polyisocyanate unwesentlich, ob der erfindungsgemäße Katalysator in dem zu trimerisierenden Mono-, Di- oder Polyisocyanat löslich ist, oder nicht. Auch kann der zur Bildung der Hydrogenfluoride nötige Fluorwasserstoff in reiner oder gelöster Form dem zu trimerisierenden Isocyanat(gemisch) vor oder während der Trimerisierung zugefügt werden. Dies gilt ebenfalls für Substanzen, die unter den Reaktionsbedingungen als HF-Lieferanten auftreten.

Die Herstellung der Isocyanuratgruppen enthaltenden Polyisocyanate durch partielle Trimerisierung kann kontinuierlich (Rohrreaktor oder Kesselkaskade) erfolgen oder auch batchweise durchgeführt werden. Die erfindungsgemäßen Katalysatoren der Formel (I) werden in geringer Konzentration zwischen 0.01 und 5.0 Gew.-%, eingesetzt. Die exakte Menge ist abhängig vom individuellen Katalysator, vom Umsatzziel und von der Verfahrensweise.

Die Trimersierung kann isotherm in einem Temperaturbereich zwischen 0°C und 100°C, bevorzugt 20°C und 80°C durchgeführt werden. Die Reaktion kann unter quantitativer Umsetzung der beteiligten Isocyanatgruppen des/der Ausgangs(poly)isocyanat(es)/mischung erfolgen oder bei beliebigen Umsetzungsgraden unterbrochen werden. Bevorzugt wird ein Umsatz von 10-50% angestrebt. Ist der gewünschte Umsatz erreicht, wird die Trimerisierung durch Zudosierung (unter)stöchiometrischer Mengen eines Deaktivierungsmittels abgestoppt. Zur Inhibierung des Katalysatorsystems eignen sich zum Beispiel Säuren oder Säurederivate wie HCl, organische Sulfonsäuren oder saure Ester der phosphorigen Säure und Phosphorsäure.

Die Reaktionsführung kann auch exotherm ausgelegt werden. In diesem Fall.wird die Temperatur der Reaktionsmischung bestehend aus dem erfindungsgemäßen Katalysator und dem Ausgangs(poly)isocyanat bzw. der Ausgangs(poly)isocyanat(mischung) zur Initiierung der exothermen Trimerisierung auf 120-160°C, bevorzugt auf 80-120°C, erhöht. Alternativ können die zur Bildung des erfindungsgemäßen Katalysators notwendigen Bestandteile bzw. der Katalysator in vorgefertigter Form auch zudosiert werden, nachdem das Ausgangs(poly)isocyanat bzw. die Ausgangs(poly)isocyanat(mischung) die zur Initiierung der exothermen Reaktion notwendige Temperatur erreicht hat. Die exakte Temperatur, bei der die exotherme Umsetzung initiiert wird, ist unter anderem eine Funktion des Isocyanats, des individuellen Katalysators und der Katalysatorkonzentration und kann leicht experimentell ermittelt werden. In aller Regel wird der erfindungsgemäße Katalysator im Zuge der exotherm verlaufenden Trimerisierung, bei der Temperaturen von bis zu 220°C thermisch zerstört.

Das erfindungsgemäße Verfahren kann sowohl lösemittelfrei als auch unter Verdünnung des zur Trimerisierung vorgesehenen Mono-, Di- oder Polyisocyanates bzw. der Mischungen davon durchgeführt werden. Zur Verdünnung eigenen sich grundsätzlich alle gegenüber NCO-Gruppen inerten organische Verbindungen wie z. B. Toluol, Xylol(e), höhere Aromaten, Ether und Ester. Die lösemittelfreie Variante ist bevorzugt.

Zur Herstellung Isocyanuratgruppen enthaltender Polyisocyanate werden die erfindungsgemäßen Katalysatoren der Formel (I) bevorzugt in Mengen von 0.01 - 5 Gew.-%, bevorzugt 0.02 - 3 Gew.-% , basierend auf dem Gewicht des eingesetzten Ausgangs(poly)isocyanates bzw. der Ausgangs(poly)isocyanat(mischung)(en), eingesetzt. Die exakte Menge läßt sich leicht experimentell ermitteln und ist abhängig von der katalytischen Aktivität des individuellen Kontaktes, dem Umsatzziel und der Verfahrensweise. Die Trimerisierung kann isotherm oder exotherm, kontinuierlich oder diskontinuierlich durchgeführt werden. Nach erfolgter chemischer oder thermischer Deaktivierung des Katalysators kann das nicht umgesetzte Monomer, sei es Mono-, Di- oder niedermolekulares Polyisocyanat, durch Kurzwegverdampfung, Dünnschichtverdampfung oder Extraktion abgetrennt und anschließend wiederverwendet werden. Die Abtrennung von überschüssigem/n Ausgangsisocyanat/en, erfolgt vorzugsweise, wenn die erfindungsgemäßen Verfahrensprodukte für Anwendungen im Polyurethanlack- und -beschichtungssektor bestimmt sind.

Die erfindungsgemäß hergestellten monomerbefreiten isocyanuratgruppenhaltigen Isocyanurate stellen nützliche Zwischenprodukte für Polyurethanbeschichtungen, z. B. Leder- und Textilbeschichtungen, und für Polyurethandispersionen und Klebstoffe dar, und sind besonders wertvoll als Polyisocyanat-Komponente in 1- und 2-Komponenten Polyurethansystemen für wetter- und lichtbeständige Polyurethanlacke. Dabei können die erfindungsgemäßen Verfahrenprodukte sowohl als solche als auch in mit Blockierungsmitteln blockierter Form zum Einsatz gelangen. Geeignete Blockierungsmittel sind dabei beispielsweise Lactame wie ε-Caprolactam, Oxime wie Methylethylketoxim oder Butanonoxim, Triazole wie 1H-1,2,4-Triazol, leicht enolisierbare Verbindungen wie Acetessigester oder Acetylaceton oder auch Malonsäurederivate wie Malonsäurediester mit 1-10 C-Atomen in den Alkoholresten.

Die Erfindung wird durch die folgenden Beispiele näher erläutert.

### Beispiele

Alle Prozentangaben verstehen sich, sofern nicht anders angegeben, als Gewichtsprozente. Sämtliche Reaktionen wurden unter einer Stickstoffatmosphäre durchgeführt.

### Beispiel 1 (Herstellung des Katalysators)

20 g (0.11 mol) Heptamethyldisilazan wurden bei Raumtemperatur tropfenweise mit 11 ml einer 1 molaren Lösung von Tetrabutylammoniumfluorid in THF versetzt. Die Reaktionsmischung wurde in einem Schüttelautomat 2 h kräftig geschüttelt. Nach Einstellung des Schüttelvorgangs bildeten sich zwei klare Phasen aus. Die untere, den erfindungsgemäßen Katalysator enthaltende, Phase wurde abgetrennt und für den nachfolgend beschriebenen Versuch zur Trimerisierung von HDI (Beispiel 2) eingesetzt.

### Beispiel 2 (Trimerisierung in Gegenwart des vorgefertigten Katalysators)

400 g HDI wurden bei Raumtemperatur unter Rühren tropfenweise mit 2 ml der erfindungsgemäßen Katalysatorlösung aus Beispiel 1 versetzt. Aufgrund sehr hoher lokaler Konzentrationen des hochreaktiven Katalysators an der Eintropfstelle wurde dort in geringem Umfang Verklumpung des HDI beobachtet. Nach vollständiger Zudosierung des Katalysator wurde die Temperatur der Reaktionslösung zur auf ca. 100 °C erhöht. Nach Initiierung der exothermen Trimerisierungsreaktion wurde die Heizquelle entfernt. Die Temperatur der Reaktionsmischung stieg innerhalb von 40 Sekunden auf ein Maximum (ca. 210 °C) an und fiel nach der im Verlauf der Umsetzung erfolgenden thermischen Deaktivierung des Katalysators wieder ab. Man ließ auf Raumtemperatur abkühlen, filtirierte duch einen Faltenfilter und trennt das überschüssige Monomer vom Polyisocyanat durch Kurzwegverdampfung ab. Das entmonomerisierte Harz hatte einen NCO-Gehalt von 20,2 %.

### Beispiel 3 (In situ-Herstellung des Katalysators und Trimerisierung)

a) Eine Mischung aus 800 g HDI, 0,24 g (0,03 %) Tetrabutylammoniumfluorid und 0,14 g (0,018 %) Heptamethyldisilazan wurde unter Rühren langsam erhitzt, bis die Temperatur der Initiierung der exothermen Trimerisierung erreicht wurde (ca. 120 °C). Die Heizquelle wurde entfernt und die Temperatur der Reaktionsmischung stieg innerhalb von 60 Sekunden auf 232 °C an. Man ließ auf Raumtemperatur abkühlen und trennte das überschüssige Monomer vom Polyisocyanat durch Kurzwegverdampfung ab. Das entmonomerisierte Harz hatte einen NCO-Gehalt von 20,7 %.
b) Eine Mischung aus 800 g HDI und 0,62 g (0,08 %) Tetrabutylammoniumfluorid und 1,4 g (0,18 %) Heptamethyldisilazan wurde 20 min bei 50°C gerührt. Der NCO-Gehalt der Reaktionsmischung betrug 40,1 % (ca. 36 % Umsatz) . Die Reaktion wurde durch Zusatz von 5,8 g einer 2,5%igen Lösung von HCl in HDI abgestoppt und überschüssiges Monomer durch Kurzwegverdampfung abgetrennt. Das monomerbefreite Polyisocyanat hatte einen NCO-Gehalt von 22,2 %.

### Beispiel 4 (In situ-Herstellung des Katalysators und Trimerisierung)

a) Eine Mischung aus 800 g HDI und 0,64 g (0,08 %) Tetrabutylammoniumfluorid-Trihydrat und 1,4 g (0,18 %) Heptamethyldisilazan wurde 40 min bei 60 °C gerührt. Der NCO-Gehalt der Reaktionsmischung betrug 40,2 % (ca. 36 % Umsatz) . Die Reaktion wurde durch Zusatz von 2,5 g einer 2,9%igen Lösung von HCl in HDI abgestoppt und überschüssiges Monomer durch Kurzwegverdampfung abgetrennt. Das monomerbefreite Polyisocyanat hatte einen NCO-Gehalt von 22,2 %.
b) Eine Mischung aus 800 g HDI und 0,71 g (0,09 %) Tetraphenylphosphoniumfluorid (gemörsert)und 1,4 g (0,18 %) Heptamethyldisilazan wurde 15 min bei 50 °C gerührt. Man ließ auf 30 °C abkühlen und stoppte die Reaktion durch Zusatz von 5,0 g einer 2,9%igen Lösung von HCl in HDI. Der NCO-Gehalt der Reaktionsmischung betrug 39,0 % (ca. 39 % Umsatz). Überschüssiges Monomer wurde durch Kurzwegverdampfung abgetrennt. Das monomerbefreite Polyisocyanat hatte einen NCO-Gehalt von 22,0 %.
c) Eine Mischung aus 800 g HDI und 8 g (1,0 %) Tetrabutylammoniumfluorid auf Kieselgel (1,0-1,5 mol Fluorid pro Gramm) und 1,4 g (0,18%) Heptamethyldisilazan wurde 90 min bei 50 °C gerührt. Der NCO-Gehalt der Reaktionsmischung betrug 41,1 % (ca. 32 % Umsatz). Die Reaktionmischung wurde vom Kieselgel abfiltriert und das Filtrat mit 5,8 g einer 2,5%igen Lösung von HCl in HDI versetzt. Überschüssiges Monomer wurde durch Kurzwegverdampfung abgetrennt. Das monomerbefreite Polyisocyanat hatte einen NCO-Gehalt von 22,8 %.
d) Eine Mischung aus 800 g HDI und 16 g (1,0 %) Tetrabutylammoniumfluorid auf Aluminiumoxid (ca. 15 Gew.-%) und 1,4 g (0,18 %) Heptamethyldisilazan wurde 70 min bei 70 °C gerührt. Der NCO-Gehalt der Reaktionsmischung betrug 40,6 % (ca. 34 % Umsatz). Die Reaktionmischung wurde vom Aluminiumoxid abfiltriert und das Filtrat mit 5,8 g einer 2,5%igen Lösung von HCl in HDI versetzt. Überschüssiges Monomer wurde durch Kurzwegverdampfung abgetrennt. Das monomerbefreite Polyisocyanat hatte einen NCO-Gehalt von 22,3 %.
e) Eine Mischung aus 800 g HDI und 0,68 g (0,09 %) Tetrabutylammoniumhydrogendifluorid (50%ig in Dichlormethan) und 1,4 g (0,18 %) Heptamethyldisilazan wurde 180 min bei 50 °C gerührt. Der NCO-Gehalt der Reaktionsmischung betrug 40,4 % (ca. 36 % Umsatz) . Die Reaktion wurde durch Zusatz von 3,5 g einer 2,9%igen Lösung von HCl in HDI abgestoppt und überschüssiges Monomer durch Kurzwegverdampfung abgetrennt. Das monomerbefreite Polyisocyanat hatte einen NCO-Gehalt von 22,6 %.
f) Eine Mischung aus 800 g HDI und 0,64 g (0,08 %) Tetrabutylammoniumfluorid und 1,5 g (0,19 %) Diethylaminotrimethylsilan wurde 60 min bei 60 °C gerührt. Der NCO-Gehalt der Reaktionsmischung betrug 39,9 % (ca. 36 % Umsatz) . Die Reaktion wurde durch Zusatz von 1,7 g Dibutylphosphat abgestoppt und überschüssiges Monomer durch Kurzwegverdampfung abgetrennt. Das monomerbefreite Polyisocyanat hatte einen NCO-Gehalt von 22,1 %.
g) Eine Mischung aus 800 g HDI und 0,63 g (0,08 %) Tetrabutylammoniumfluorid und 1,8 g (0,23 %) Nonamethyltrisilazan wurde 45 min bei 80 °C gerührt. Der NCO-Gehalt der Reaktionsmischung betrug 39,5 % (ca. 38 % Umsatz). Die Reaktion wurde durch Zusatz von 1,7 g Dibutylphosphat abgestoppt und überschüssiges Monomer durch Kurzwegverdampfung abgetrennt. Das monomerbefreite Polyisocyanat hatte einen NCO-Gehalt von 22,1 %.

### Beispiel 5 (In situ-Herstellung des Katalysators und Trimerisierung)

a) Eine Mischung aus 800 g IPDI und 1,0 g (0,125 %) Tetrabutylammoniumfluorid und 1,0 g (0,125 %) Heptamethyldisilazan wurde 15 min bei 70 °C gerührt. Der NCO-Gehalt der Reaktionsmischung betrug 30,3 % (ca. 40 % Umsatz) . Die Reaktion wurde durch Zusatz von 8,3 g einer 2,5%igen Lösung von HCl in HDI abgestoppt, filtriert und überschüssiges Monomer durch Kurzwegverdampfung abgetrennt. Das monomerbefreite Polyisocyanat hatte einen NCO-Gehalt von 17,8 %.
b) Eine Mischung aus 800 g IPDI und 1,15 g (0,14 %) Tetraphenylphosphoniumfluorid (gemörsert) und 1,12 g (0,14 %) Heptamethyldisilazan wurde 2,5 h bei 70 °C gerührt. Der NCO-Gehalt der Reaktionsmischung betrug 34,0 % (ca. 20 % Umsatz) . Die Reaktion wurde durch Zusatz von 0,67 g Dibutylphosphat abgestoppt, filtriert und überschüssiges Monomer durch Kurzwegverdampfung abgetrennt. Das monomerbefreite Polyisocyanat hatte einen NCO-Gehalt von 17,8 %.

### Beispiel (Vergleichsbeispiel, nicht erfindungsgemäß)

a) Eine Mischung aus 1000 g HDI und 10 g (1 %) Heptamethyldisilazan wurde 2 h bei 140 °C gerührt. Anschließend ließ man auf Raumtemperatur abkühlen und bestimmte den NCO-Gehalt der Reaktionsmischung zu 38,6 % (entspricht einem Umsatz von ca. 40 %). Nach Deaktivierung des Katalysators mit 4 g Methanol wurde überschüssiges HDI durch Kurzwegverdampfung entfernt. Das monomerbefreite Polyisocyanat wies einen NCO-Gehalt von 21,8 % auf.
b) Eine Mischung aus 800 g HDI und 4 g (0,5 %) Heptamethyldisilazan wurde 4 h bei 140 °C gerührt. Anschließend ließ man auf Raumtemperatur abkühlen und bestimmte den NCO-Gehalt der Reaktionsmischung zu 40,1 % (entspricht einem Umsatz von ca. 36 %). Nach Deaktivierung des Katalysators mit 1,6 g Methanol wurde überschüssiges HDI durch Kurzwegverdampfung entfernt. Das monomerbefreite Polyisocyanat wies einen NCO-Gehalt von 22,0 % auf.
c) Eine Mischung aus 800 g HDI und 8 g (1 %) Heptamethyldisilazan wurde 8 h bei 100 °C gerührt. Anschließend ließ man auf Raumtemperatur abkühlen und bestimmte den NCO-Gehalt der Reaktionsmischung zu 39,9 % (entspricht einem Umsatz von ca. 36 %). Nach Deaktivierung des Katalysators mit 3,2 g Methanol wurde überschüssiges HDI durch Kurzwegverdampfung entfernt. Das monomerbefreite Polyisocyanat wies einen NCO-Gehalt von 21,9 % auf.

### Beispiel 7 (Vergleichsbeispiel, nicht erfindungsgemäß)

Eine Mischung aus 800 g IPDI und 8 g (1 %) Heptamethyldisilazan wurde 2 h bei 100 °C gerührt. Nachdem sich kein Umsatz feststellen ließ wurde weitere 2 h bei 140 °C gerührt. Der Umsatz betrug weniger als 3 %. Die Reaktion wurde abgebrochen, auf die Aufarbeitung wurde angesichts des geringfügigen Umsatzes verzichtet.

### Beispiel 8 (Vergleichsbeispiel, nicht erfindungsgemäß)

a)Eine Mischung aus 800 g HDI und 0,24 g (0,03 %) Tetrabutylammoniumfluorid wurde auf 100 °C aufgeheizt und 20 min bei dieser Temperatur belassen. Nachdem kein Umsatz festgestellt werden konnte, wurde die Temperatur weiter erhöht und die Reaktionsmischung 20 min bei 140 °C gerührt. Der Umsatz betrug weniger als 1 %. Die Reaktion wurde abgebrochen, auf die Aufarbeitung wurde angesichts des geringfügigen Umsatzes verzichtet.
b)Eine Mischung aus 800 g HDI und 0,62 g (0,08 %) Tetrabutylammoniumfluorid wurde 1 h bei 60 °C gerührt. Der NCO-Gehalt der Reaktionsmischung betrug 39,9 % (ca. 36 % Umsatz). Die Reaktion wurde durch Zusatz von 1,72 g einer 2,5%igen Lösung von HCl in HDI abgestoppt und überschüssiges Monomer durch Kurzwegverdampfung abgetrennt. Das monomerbefreite Polyisocyanat hatte einen NCO-Gehalt von 22,2 %.

### Beispiel 9 (Vergleichsbeispiel, nicht erfindungsgemäß)

Eine Mischung aus 800 g IPDI und 4,0 g (0,5 %) Tetrabutylammoniumfluorid wurde 15 min bei 70 °C gerührt. Der NCO-Gehalt der Reaktionsmischung betrug 31,7 % (ca. 32 % Umsatz). Die Reaktion wurde durch Zusatz von 22,4 g einer 2,5%igen Lösung von HCl in HDI abgestoppt, filtriert und überschüssiges Monomer durch Kurzwegverdampfung abgetrennt. Das monomerbefreite Polyisocyanat hatte einen NCO-Gehalt von 17,6 %.

## Patentansprüche

1. Katalysator für die Trimerisierung von Isocyanaten der allgemeinen Formel (I) 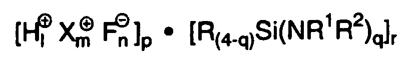 wobei
n = m + 1 mit 1 ≥ m/n > 0, bevorzugt 1 ≥ m/n ≥ 0.1, besonders bevorzugt 1 ≥ m/n ≥ 0.25 ist, und 1 ≥ 0 ist,
p > 0 und r > 0 sind und das Verhältnis p/r einen beliebigen Wert, bevorzugt zwischen 0.01 und 100, besonders bevorzugt zwischen 0.1 und 10 annehmen kann,
q = 1 oder 2 ist,
R für einen gesättigten oder ungesättigten, linearen oder verzweigten aliphatischen, cycloaliphatischen Rest oder Aryl-, Aralkyl oder Alkylarylrest mit 1 bis 16 C-Atomen steht und zwei Reste R über eine Alkylenbrücke miteinander verknüpft sein können,
R¹ für R, SiR₃ oder einen Amidrest der Formel (II) 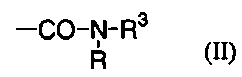 steht,
R² gleich R oder H ist, wobei - sofern R¹ kein Amidrest ist - R² mit R¹ über eine Alkylenbrücke miteiander vernüpft sein kann,
R³ gleich R oder SiR₃ ist und
X⊕ für ein organisches Onium-Kation der allgemeinen Formel (III) 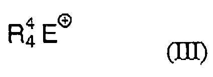 steht, wobei
E gleich Stickstoff oder Phosphor ist und
R⁴ für gleich oder verschiedene, linearen oder verzweigte aliphatische, cycloaliphatische oder araliphatische Reste mit 1 bis 20 C-Atomen steht.

2. Katalysator nach Anspruch 1,
**dadurch gekennzeichnet,**
**dass** Aminosilane, Silylharnstoffe und/oder Silazane als Ausgangskomponenten enthalten sind.

3. Katalysator nach mindestens einem der Ansprüche 1 bis 2,
**dadurch gekennzeichnet,**
**dass** als Ausgangskomponenten Methylaminotrimethylsilan, Diemthylaminotrimethylsilan, Dibutylaminotrimethylsilan, Diethylaminodimethylphenylsilan, Bis(dimethyamino) dimethylsilan, Bis(diethylamino)dimethylsilan, Bis(dibutylamino)dimethylsilan, Bis (dimethylamino)methylphenylsilan, N-Methyl-N-trimethylsilyl-N'-methyl-N'-butylharnstoff, N-Trimethylsilyl-N-methyl-N',N'-dimethylharnstoff, N-Trimethylsilyl-N-ethyl-N',N'-dimethylharnstoff, N-Trimethylsilyl-N-butyl-N'-butyl-N'-trimethylsilylharnstoff, Trimethylsilylpyrrolidin, Trimethlsilylmorpholin, Trimethylsilylpiperidin, Trimethylsilyl-piparazin, Hexamethyldisilazan, Heptamethyldisilazan, 1,3-Diethyl-1,1,3,3-tetra-methyldisilazan, Hexaethyldisilazan und oder 1,3-Diphenyl-1,1,3,3-tetramethyldisilazan enthalten sind.

4. Katalysator nach mindestens einem der Ansprüche 1 bis 3,
**dadurch gekennzeichnet**,
quarternäre Ammonium- und/oder Phosphoniumfluoride, quarternäre Ammonium- und/oder Phosphoniumhydrogenpolyfluoride als Ausgangskomponenten enthalten sind.

5. Katalysator nach mindestens einem der Ansprüche 1 bis 4,
**dadurch gekennzeichnet,**
**dass** als Ausgangsverbindungen Tetrabutyl-, Tetraethyl-, Tetraoctyl-, Tetraphenyl-, Tributyltetradecyl-, Trioctylmethyl-, Benzyltrimethyl-, Benzyltriethylammoniumfluorid, Tetrabutyl-, Tetraethyl-, Tetraoctyl-, Tetraphenyl-, Tributyltetradecyl-, Trioctylmethyl-, Benzyltrimethyl- oder Benzyltriethylphosphoniumfluorid, und/oder die entsprechenden quarternären Ammonium- bzw. Phosphoniumhydrogenpolyfluoride, enthalten sind. (Richtig?)

6. Verfahren zur Herstellung einer Verbindung der allgemeinen Formel (I) 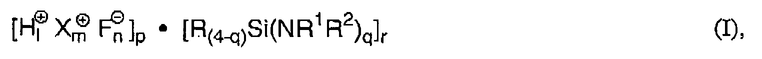 wobei
n = m + 1 mit 1 ≥ m/n > 0, bevorzugt 1 ≥ m/n ≥ 0.1, besonders bevorzugt 1 ≥ m/n ≥ 0.25 ist, und 1 ≥ 0 ist,
p > 0 und r > 0 sind und das Verhältnis p/r einen beliebigen Wert, bevorzugt zwischen 0.01 und 100, besonders bevorzugt zwischen 0.1 und 10 annehmen kann,
q = 1 oder 2 ist,
R für einen gesättigten oder ungesättigten, linearen oder verzweigten aliphatischen, cycloaliphatischen Rest oder Aryl-, Aralkyl oder Alkylarylrest mit 1 bis 16 C-Atomen steht und zwei Reste R über eine Alkylenbrücke miteinander verknüpft sein können,
R¹ für R, SiR₃ oder einen Amidrest der Formel (II) 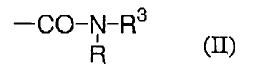 steht,
R² gleich R oder H ist, wobei - sofern R¹ kein Amidrest ist - R² mit R¹ über eine Alkylenbrücke miteiander vernüpft sein kann,
R³ gleich R oder SiR₃ ist und
X⊕ für ein organisches Onium-Kation der allgemeinen Formel (III) 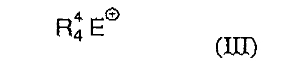 steht, wobei
E gleich Stickstoff oder Phosphor ist und
R⁴ für gleich oder verschiedene, lineare oder verzweigte aliphatische, cycloaliphatische oder araliphatische Reste mit 1 bis 20 C-Atomen steht, gegebenenfalls in Gegenwart eines Solvatationsmittels, bei Temperaturen von - 20 bis 200 °C, wobei Ausgangsverbindungen gemäß den Ansprüchen 2 oder 3 und 4 oder 5 eingesetzt werden.

7. Verwendung der Verbindungen nach einem der Ansprüche 1 bis 5 zur Trimerisierung von Mono-, Di- oder Polyisocyanaten.

8. Verwendung nach Anspruch 7,
**dadurch gekennzeichnet,**
**dass** als Isocynatverbindungen aliphatische, cycloaliphatische, araliphatische und/oder aromatische Mono-, Di- oder Polyisocyanate eingesetzt werden.

9. Verwendung nach Anspruch 8,
**dadurch gekennzeichnet,**
**dass** Cyclohexandiisocyanate, Methylcyclohexandiisocyanate, Ethylcyclohexajidiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate, wie Hexamethylendüsocyanat (HDI) oder 1,5-Diisocyanato-2-methylpentan (MPDI), Heptandiisocyanate, Octandiisocyanate, Nonandiisocyanate, wie 1,6-Diisocyanato-2,4,4-trimethylhexan und 1,6-Diisocyanato-2,2,4-trimethylhexan (TMDI), Nonantriisocyanate, wie 4-Isocyanatomethyl-1,8-octandiisocyanat (TIN), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) oder 1,4-Bis(isocyanatomethyl) cyclohexan (1,4-H₆-XDI) eingesetzt werden.

10. Verwendung nach Anspruch 8,
**dadurch gekennzeichnet,**
**dass** HDI, IPDI, MPDI, TMDI, 1,3- und 1,4- H₆-XDI, NBDI oder Mischungen aus HDI und IPDI eingesetzt werden.

11. Verwendung nach Anspruch 8,
**dadurch gekennzeichnet,**
**dass** als Monoisocyanate Ethylisocyanat, Cyclohexylisocyanat, Phenylisocyanat, Tolylisocyanat, Benzylisocyanat sowie alle Regio- und Stereoisomeren der Verbindungen: Propylisocyanate, Hexylisocyanate, Octylisocyanate und Methoxypropylisocyanat eingesetzt werden.

12. Verfahren zur Herstellung von Isocyanuratgruppen enthaltenden Polyisocyanaten durch katalytisch induzierte Trimerisierung organischer Mono-, Di- oder Polyisocyanate, **dadurch gekennzeichnet, dass** Trimerisierungskatalysatoren der allgemeinen Formel (I) 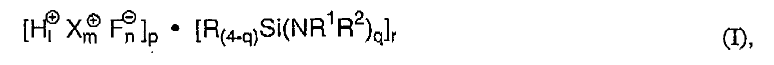 wobei
n = m + 1 mit 1 ≥ m/n > 0, bevorzugt 1 ≥ m/n ≥ 0.1, besonders bevorzugt 1 ≥ m/n ≥ 0.25 ist, und 1 ≥ 0 ist,
p > 0 und r > 0 sind und das Verhältnis p/r einen beliebigen Wert, bevorzugt zwischen 0.01 und 100, besonders bevorzugt zwischen 0.1 und 10 annehmen kann,
q = 1 oder 2 ist,
R für einen gesättigten oder ungesättigten, linearen oder verzweigten aliphatischen, cycloaliphatischen Rest oder Aryl-, Aralkyl oder Alkylarylrest mit 1 bis 16 C-Atomen steht und zwei Reste R über eine Alkylenbrücke miteinander verknüpft sein können,
R¹ für R, SiR₃ oder einen Amidrest der Formel (II) 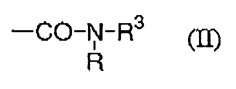 steht,
R² gleich R oder H ist, wobei - sofern R¹ kein Amidrest ist - R² mit R¹ über eine Alkylenbrücke miteiander vernüpft sein kann,
R³ gleich R oder SiR₃ ist und
X^{⊕} für ein organisches Onium-Kation der allgemeinen Formel (III) 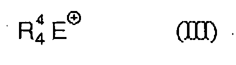 steht, wobei
E gleich Stickstoff oder Phosphor ist und
R⁴ für gleich oder verschiedene, lineare oder verzweigte aliphatische, cycloaliphatische oder araliphatische Reste mit 1 bis 20 C-Atomen steht, eingesetzt werden.

13. Verfahren nach Anspruch 12,
**dadurch gekennzeichnet,**
**dass** aliphatische, cycloaliphatische, araliphatische, oder aromatische Mono-, Di oder Polyisocyanate eingesetzt werden.

14. Verfahren nach Anspruch 13,
**dadurch gekennzeichnet,**
**dass** Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate, wie Hexamethylendiisocyanat (HDI) oder 1,5-Diisocyanato-2-methylpentan (MPDI), Heptandiisocyanate, Octandiisocyanate, Nonandiisocyanate, wie 1,6-Diisocyanato-2,4,4-trimethylhexan und 1,6-Diisocyanato-2,2,4-trimethylhexan (TMDI), Nonantriisocyanate, wie 4-Isocyanatomethyl-1,8-octandiisocyanat (TIN), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) oder 1,4-Bis(isocyanatomethyl)-cyclohexan (1,4-H₆-XDI) eingesetzt werden.

15. Verfahren nach Anspruch 13,
**dadurch gekennzeichnet,**
**dass** HDI, IPDI, MPDI, TMDI, 1,3- und 1,4- H6-XDI, NBDI sowie Mischungen aus HDI und IPDI eingesetzt werden.

16. Verfahren nach Anspruch 13,
**dadurch gekennzeichnet,**
**dass** Monoisocyanate ausgewählt aus Ethylisocyanat, Cyclohexylisocyanat, Phenylisocyanat, Tolylisocyanat, Benzylisocyanat sowie alle Regio- und Stereoisomeren der Verbindungen Propylisocyanate, Hexylisocyanate, Octylisocyanate und Methoxypropylisocyanat eingesetzt werden.

17. Verfahren nach mindestens einem der Ansprüche 12 bis 16,
**dadurch gekennzeichnet,**
**dass** die Herstellung der Isocyanuratgruppen enthaltenden Polyisocyanate kontinuierlich oder batchweise durchgeführt wird

18. Verfahren nach mindestens einem der Ansprüche 12 bis 17
**dadurch gekennzeichnet,**
**dass** die Katalysatoren in Konzentration zwischen 0.01 und 5.0 Gew.-%, eingesetzt werden.

19. Verfahren nach mindestens einem der Ansprüche 12 bis 18,
**dadurch gekennzeichnet,**
**dass** die Herstellung isotherm in einem Temperaturbereich zwischen 0 °C und 100 °C, bevorzugt 20 °C und 80 °C, durchgeführt wird.

## Claims

1. Catalyst for the trimerization of isocyanates, of the general formula (I) 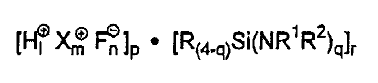 where
n = m + 1 with 1 ≥ m/n > 0, preferably 1 ≥ m/n ≥ 0.1, with particular preference 1 ≥ m/n ≥ 0.25, and 1 ≥ 0,
p > 0 and r > 0 and the ratio p/r can adopt any desired value, preferably between 0.01 and 100, with particular preference between 0.1 and 10,
q = 1 or 2,
R stands for a saturated or unsaturated, linear or branched aliphatic or cycloaliphatic radical or aryl, aralkyl, or alkylaryl radical having from 1 to 16 carbon atoms, and two radicals R can be linked with one another via an alkylene bridge,
R¹ represents R, SiR₃ or an amide radical of formula (II) 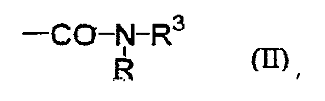 R² is R or H, it being possible for R², if R¹ is not an amide radical, to be linked to R¹ via an alkylene bridge,
R³ is R or SiR₃, and
X^{ρ} represents an organic onium cation of the general formula (III) 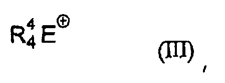 where
E is nitrogen or phosphorus and
R⁴ represents identical or different, linear or branched aliphatic, cycloaliphatic or araliphatic radicals having from 1 to 20 carbon atoms.

2. Catalyst according to Claim 1, **characterized in that** amino silanes, silyl ureas and/or silazanes are present as starting components.

3. Catalyst according to at least one of Claims 1 and 2, **characterized in that** methylaminotrimethylsilane, dimethylamino-trimethylsilane, dibutylaminotri-methylsilane, diethylaminodimethylphenylsilane, bis(dimethylamino)dimethylsilane, bis(diethylamino)dimethylsilane, bis(dibutylamino)dimethylsilane, bis(dimethylamino)methylphenylsilane, N-methyl-N-trimethylsilyl-N'-methyl-N'-butylurea, N-trimethylsilyl-N-methyl-N' ,N '-dimethylurea, N-trimethylsilyl-N-ethyl-N' ,N'-dimethylurea, N-trimethylsilyl-N-butyl-N' -butyl-N'-trimethylsilylurea, trimethylsilylpyrrolidine, trimethylsilyl-morpholine, trimethylsilyl-piperidine, trimethyl-silylpiperazine, hexamethyldisilazane, hepta-methyldisilazane, 1,3-diethyl-1,1,3,3-tetra-methyldisilazane, hexaethyldisilazane and/or 1,3-diphenyl-1,1,3,3-tetramethyldisilazane are present as starting components.

4. Catalyst according to at least one of Claims 1 to 3, **characterized in that** quaternary ammonium and/or phosphonium fluorides, quaternary ammonium and/or phosphonium hydrogen polyfluorides are present as starting components.

5. Catalyst according to at least one of Claims 1 to 4, **characterized in that** tetrabutyl-, tetraethyl-, tetraoctyl-, tetraphenyl-, tributyltetradecyl-, trioctylmethyl-, benzyltrimethyl-, or benzyltriethylammonium fluoride, tetrabutyl-, tetraethyl-, tetraoctyl-, tetraphenyl-, tributyltetradecyl-, trioctylmethyl-, benzyltrimethyl-, or benzyltriethylphosphonium fluoride, and/or the corresponding quaternary ammonium and/or phosphonium hydrogen polyfluorides, are present as starting compounds.

6. Process for preparing a compound of the general formula (I) 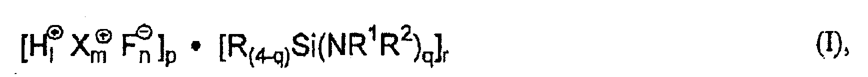 where
n = m + 1 with 1 ≥ m/n > 0, preferably 1 ≥ m/n ≥ 0.1, with particular preference 1 ≥ m/n ≥ 0.25, and 1 ≥ 0,
p > 0 and r > 0 and the ratio p/r can adopt any desired value, preferably between 0.01 and 100, with particular preference between 0.1 and 10,
q = 1 or 2,
R stands for a saturated or unsaturated, linear or branched aliphatic or cycloaliphatic radical or aryl, aralkyl, or alkylaryl radical having from 1 to 16 carbon atoms, and two radicals R can be linked with one another via an alkylene bridge,
R¹ represents R, SiR₃ or an amide radical of formula (II) 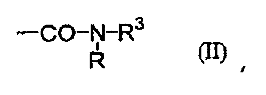 R² is R or H, it being possible for R², if R¹ is not an amide radical, to be linked to R¹ via an alkylene bridge,
R³ is R or SiR₃, and
X^{ρ} represents an organic onium cation of the general formula (III) 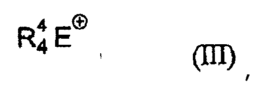 where
E is nitrogen or phosphorus and
R⁴ represents identical or different, linear or branched aliphatic, cycloaliphatic or araliphatic radicals having from 1 to 20 carbon atoms, in the presence if desired of a solvating agent, at temperatures from -20 to 200°C, wherein starting compounds according to Claims 2 or 3 and 4 or 5 are used.

7. Use of a compound according to any of Claims 1 to 5 for trimerizing mono-, di- or polyisocyanates.

8. Use according to Claim 7, **characterized in that** isocyanate compounds used comprise aliphatic, cycloaliphatic, araliphatic and/or aromatic mono-, di- or polyisocyanates.

9. Use according to Claim 8, **characterized in that** cyclohexane diisocyanates, methylcyclohexane diisocyanates, ethylcyclohexane diisocyanates, propylcyclohexane diisocyanates, methyldiethylcyclohexane diisocyanates, phenylene diisocyanates, tolylene diisocyanates, bis(isocyanatophenyl)methane, propane diisocyanates, butane diisocyanates, pentane diisocyanates, hexane diisocyanates, such as hexamethylene diisocyanate (HDI) or 1,5-diisocyanato-2-methylpentane (MPDI), heptane diisocyanates, octane diisocyanates, nonane diisocyanates, such as 1,6-diisocyanato-2,4,4-trimethylhexane and 1,6-diisocyanato-2,2,4-trimethylhexane (TMDI), nonane triisocyanates, such as 4-isocyanatomethyl-1,8-octane diisocyanate (TIN), decane di- and triisocyanates, undecane di- and triisocyanates, dodecane di- and triisocyanates, isophorone diisocyanate (IPDI), bis(isocyanatomethylcyclohexyl) methane (H₁₂MDI), isocyanatomethyl methylcyclohexyl isocyanates, 2,5(2,6)-bis(isocyanatomethyl) bicyclo [2.2.1] heptane (NBDI), 1,3-bis(isocyanatomethyl)cyclohexane (1,3-H₆-XDI), or 1,4-bis(isocyanatomethyl)cyclohexane (1,4-H₆-XDI) are used.

10. Use according to Claim 8, **characterized in that** HDI, IPDI, MPDI, TMDI, 1,3- and 1,4-H₆-XDI, NBDI or mixtures of HDI and IPDI are used.

11. Use according to Claim 8, **characterized in that** monoisocyanates used comprise ethyl isocyanate, cyclohexyl isocyanate, phenyl isocyanate, tolyl isocyanate, benzyl isocyanate, and all regioisomers and stereoisomers of the following compounds: propyl isocyanates, hexyl isocyanates, octyl isocyanates, and methoxypropyl isocyanate.

12. Process for preparing a polyisocyanate containing isocyanurate groups by catalytically induced trimerization of an organic mono-, di- or polyisocyanate, which comprises using a trimerization catalyst of the general formula (I) 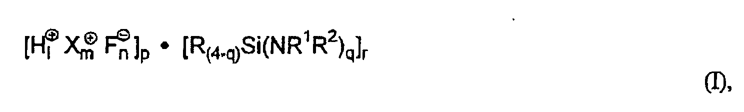 where
n = m + 1 with 1 ≥ m/n > 0, preferably 1 ≥ m/n ≥ 0.1, with particular preference 1 ≥ m/n ≥ 0.25, and 1 ≥ 0,
p > 0 and r > 0 and the ratio p/r can adopt any desired value, preferably between 0.01 and 100, with particular preference between 0.1 and 10,
q = 1 or 2,
R represents a saturated or unsaturated, linear or branched aliphatic or cycloaliphatic radical or aryl, aralkyl, or alkylaryl radical having from 1 to 16 carbon atoms, and two radicals R can be linked with one another via an alkylene bridge,
R¹ represents R, SiR₃ or an amide radical of formula (II) 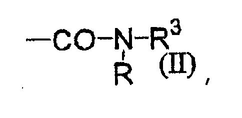 R² is R or H, it being possible for R², if R¹ is not an amide radical, to be linked to R¹ via an alkylene bridge,
R³ is R or SiR₃, and
X^{ρ} represents an organic onium cation of the general formula (III) 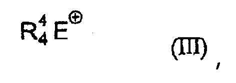 where
E is nitrogen or phosphorus and
R⁴ represents identical or different, linear or branched aliphatic, cycloaliphatic or araliphatic radicals having from 1 to 20 carbon atoms.

13. Process according to Claim 12, **characterized in that** aliphatic, cycloaliphatic, araliphatic or aromatic mono-, di- or polyisocyanates are used.

14. Process according to Claim 13, **characterized in that** cyclohexane diisocyanates, methylcyclohexane diisocyanates, ethylcyclohexane diisocyanates, propylcyclohexane diisocyanates, methyldiethylcyclohexane diisocyanates, phenylene diisocyanates, tolylene diisocyanates, bis(isocyanatophenyl)methane, propane diisocyanates, butane diisocyanates, pentane diisocyanates, hexane diisocyanates, such as hexamethylene diisocyanate (HDI) or 1,5-diisocyanato-2-methylpentane (MPDI), heptane diisocyanates, octane diisocyanates, nonane diisocyanates, such as 1,6-diisocyanato-2,4,4-trimethylhexane and 1,6-diisocyanato-2,2,4-trimethylhexane (TMDI), nonane triisocyanates, such as 4-isocyanatomethyl-1,8-octane diisocyanate (TIN), decane di- and triisocyanates, undecane di- and triisocyanates, dodecane di- and triisocyanates, isophorone diisocyanate (IPDI), bis(isocyanatomethylcyclohexyl)methane (H₁₂MDI), isocyanatomethyl methylcyclohexyl isocyanates, 2,5(2,6)-bis(isocyanatomethyl)bicyclo[2.2.1]heptane (NBDI), 1,3-bis(isocyanatomethyl)cyclohexane (1,3-H₆-XDI), or 1,4-bis(isocyanatomethyl)cyclohexane (1,4-H₆-XDI) are used.

15. Process according to Claim 13, **characterized in that** HDI, IPDI, MPDI, TMDI, 1,3- and 1,4-H₆-XDI, NBDI or mixtures of HDI and IPDI are used.

16. Process according to Claim 13, **characterized in that** monoisocyanates used comprise ethyl isocyanate, cyclohexyl isocyanate, phenyl isocyanate, tolyl isocyanate, benzyl isocyanate, and all regioisomers and stereoisomers of the following compounds: propyl isocyanates, hexyl isocyanates, octyl isocyanates, and methoxypropyl isocyanate.

17. Process according to at least one of Claims 12 to 16, **characterized in that** the preparation of the polyisocyanates containing isocyanurate groups is conducted continuously or batchwise.

18. Process according to at least one of Claims 12 to 17, **characterized in that** the catalyst is used at a concentration of between 0.01 and 5.0% by weight.

19. Process according to at least one of Claims 12 to 18, **characterized in that** the preparation is carried out isothermally in a temperature range between 0°C and 100°C, preferably between 20°C and 80°C.

## Revendications

1. Catalyseur pour la trimérisation d'isocyanates de formule générale (I) : 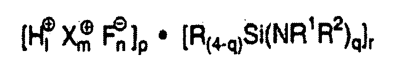 dans laquelle :
n = m + 1 avec 1 ≥ m/n > 0, de préférence 1 ≥ m/n ≥ 0,1, mieux encore 1 ≥ m/n ≥ 0,25 et avec 1 ≥ 0,
p > 0 et r > 0 et le rapport p:r peut présenter une valeur quelconque, de préférence comprise entre 0,01 et 100, mieux encore entre 0,1 et 10,
q = 1 ou 2,
R représente un radical aliphatique ou cycloaliphatique, linéaire ou ramifié, saturé ou insaturé ou un radical aryle, aralkyle ou alkylaryle ayant 1 à 16 atomes de carbone, et deux radicaux R peuvent être combinés l'un avec l'autre par le biais d'un pont alkylène,
R¹ représente R, SiR₃ ou un radical amide de formule (II) : 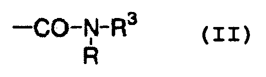
R² est identique à R ou représente H, où - pour autant que R¹ ne soit pas un radical amide - R² peut être combiné avec R¹ par le biais un pont alkylène,
R³ est identique à R ou représente SiR₃ et
X^{⊕} représente un cation organique onium de formule générale (III) : 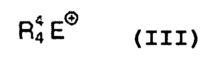
dans laquelle :
E représente un atome d'azote ou de phosphore et
R⁴ représente des radicaux aliphatiques, cycloaliphatiques ou araliphatiques linéaires ou ramifiés, identiques ou différents, ayant 1 à 20 atomes de carbone.

2. Catalyseur selon la revendication 1, **caractérisé en ce qu'**il contient des aminosilanes, des silylurées et/ou des silazanes comme composants de départ.

3. Catalyseur selon au moins l'une quelconque des revendications 1 à 2, **caractérisé en ce qu'**il contient comme composants de départs les composés suivants : méthylaminotriméthylsilane, diméthylaminotriméthylsilane, dibutylaminotriméthylsilane, diéthylaminodiméthylphénylsilane, bis(diméthylamino)diméthylsilane, bis(diéthylamino)diméthylsilane, bis(dibutylamino)diméthylsilane, bis(diméthylamino)méthylphénylsilane, N-méthyl-N-triméthylsilyl-N'-méthyl-N'-butylurée, N-triméthylsilyl-N-méthyl-N',N'-diméthylurée, N-triméthylsilyl-N-éthyl-N',N'-diméthylurée, N-triméthylsilyl-N-butyl-N'-butyl-N'-triméthylsilylurée, triméthylsilylpyrrolidine, triméthylsilylmorpholine, triméthylsilylpipéridine, triméthylsilylpipérazine, hexaméthyldisilazane, heptaméthyldisilazane, 1,3-diéthyl-1,1,3,3-tétraméthyldisilazane, hexaéthyldisilazane et/ou 1,3-diphényl-1,1,3,3-tétraméthyldisilazane.

4. Catalyseur selon au moins l'une quelconque des revendications 1 à 3, **caractérisé en ce qu'**il contient des fluorures d'ammonium quaternaire et/ou de phosphonium quaternaire, des hydrogénopolyfluorures d'ammonium quaternaire et/ou de phosphonium quaternaire comme composants de départ.

5. Catalyseur selon au moins l'une quelconque des revendications 1 à 4, **caractérisé en ce qu'**il contient comme composés de départ les composés suivants : fluorure de tétrabutylammonium, tétraéthylammonium, tétraoctylammonium, tétraphénylammonium, tributyltétradécylammonium, trioctylméthylammonium, benzyltriméthylammonium ou benzyl-triéthylammonium, fluorure de tétrabutylphosphonium, tétraéthylphosphonium, tétraoctylphosphonium, tétraphénylphosphonium, tributyl-tétradécylphosphonium, trioctylméthylphosphonium, benzyltriméthylphosphonium ou benzyltriéthylphosphonium et/ou les hydrogénopolyfluorures d'ammonium quaternaire ou de phosphonium quaternaire correspondants.

6. Procédé de fabrication d'un composé de formule générale (I) : 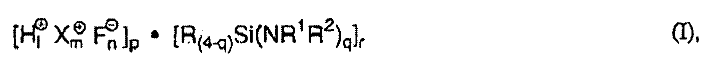 dans laquelle :
n = m +1 avec 1 ≥ m/n > 0, de préférence 1 ≥ m/n ≥ 0,1, mieux encore 1 ≥ m/n ≥ 0,25 et avec 1 ≥ 0,
p > 0 et r > 0 et le rapport p:r peut présenter une valeur quelconque, de préférence comprise entre 0,01 et 100, mieux encore entre 0,1 et 10,
q = 1 ou 2,
R représente un radical aliphatique ou cycloaliphatique linéaire ou ramifié, saturé ou insaturé, ou un radical aryle, aralkyle ou alkylaryle ayant 1 à 16 atomes de carbone, et deux radicaux R peuvent être combinés l'un avec l'autre par le biais d'un pont alkylène,
R¹ représente R, SiR₃ ou un radical amide de formule (II) : 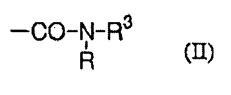
R² est identique à R ou représente H, où - pour autant que R¹ ne soit pas un radical amide - R² peut être combiné avec R¹ par le biais d'un pont alkylène,
R³ est identique à R ou représente SiR₃ et
X^{⊕} représente un cation organique onium de formule générale (III) : 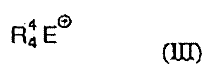
dans laquelle :
E représente un atome d'azote ou de phosphore, et
R⁴ représente des radicaux aliphatiques, cycloaliphatiques ou araliphatiques, linéaires ou ramifiés, identiques ou différents, ayant 1 à 20 atomes de carbone, éventuellement en présence d'un agent de solvatation, à des températures dans la plage de -20 à 200 °C, dans lequel on utilise les composés de départ selon les revendications 2 ou 3 et 4 ou 5.

7. Utilisation des composés selon l'une quelconque des revendications 1 à 5, pour la trimérisation de monoisocyanates, diisocyanates ou polyisocyanates.

8. Utilisation selon la revendication 7, **caractérisée en ce que** l'on utilise comme composés isocyanate, des monoisocyanates, diisocyanates ou polyisocyanates aliphatiques, cycloaliphatiques, araliphatiques et/ou aromatiques.

9. Utilisation selon la revendication 8, **caractérisée en ce que** l'on utilise les composés suivants : diisocyanates de cyclohexane, diisocyanates de méthylcyclohexane, diisocyanates d'éthylcyclohexane, diisocyanates de propylcyclohexane, diisocyanates de méthyldiéthylcyclohexane, diisocyanates de phénylène, diisocyanates de toluylène, bis(isocyanatophényl)méthane, diisocyanates de propane, diisocyanates de butane, diisocyanates de pentane, diisocyanates d'hexane, tels que le diisocyanate d'hexaméthylène (HDI) ou le, 1,5-diisocyanato-2-méthylpentane (MPDI), diisocyanates d'heptane, diisocyanates d'octane, diisocyanates de nonane, tels que le 1,6-diisocyanato-2,4,4-triméthylhexane et le 1,6-diisocyanato-2,2,4-triméthylhexane (TMDI), triisocyanates de nonane, tels que le 4-isocyanatométhyl-1,8-octanediisocyanate (TIN), diisocyanates et triisocyanates de décane, diisocyanates et triisocyanates d'undécane, diisocyanates et triisocyanates de dodécane, diisocyanate d'isophorone (IPDI), bis(isocyanatométhylcyclohexyl)méthane (H₁₂MDI), isocyanatométhylméthylcyclohexylisocyanates, 2,5(2,6)-bis-(isocyanatomêthyl)bicyclo[2.2.1]heptane (NBDI), 1,3-bis(isocyanatométhyl)cyclohexane (1,3-H₆-XDI) ou 1,4-bis(isocyanatométhyl)cyclohexane (1,4-H₆-XDI).

10. Utilisation selon la revendication 8, **caractérisée en ce que** l'on utilise les composés HDI, IPDI, MPDI, TMDI, 1,3- et 1,4-H₆-XDI, NBDI ou des mélanges d'HDI et d'IPDI.

11. Utilisation selon la revendication 8, **caractérisée en ce que** l'on utilise, comme monoisocyanates, les composés suivants : isocyanate d'éthyle, isocyanate de cyclohexyle, isocyanate de phényle, isocyanate de tolyle, isocyanate de benzyle, ainsi que tous les régioisomères et stéréoisomères des composés suivants : isocyanates de propyle, isocyanates d'hexyle, isocyanates d'octyle et isocyanates de méthoxypropyle.

12. Procédé de fabrication de polyisocyanates contenant des groupements isocyanurate, par trimérisation induite par voie catalytique de monoisocyanates, diisocyanates ou polyisocyanates organiques, **caractérisé en ce que** l'on utilise des catalyseurs de trimérisation de formule générale (I) : 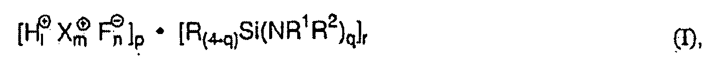 dans laquelle :
n = m +1 avec 1 ≥ m/n > 0, de préférence 1 ≥ m/n ≥ 0,1, mieux encore 1 ≥ m/n ≥ 0,25 et 1 ≥ 0,
p > 0 et r > 0 et le rapport p:r peut présenter une valeur quelconque, de préférence comprise entre 0,01 et 100, mieux encore entre 0,1 et 10,
q = 1 ou 2,
R représente un radical aliphatique ou cycloaliphatique linéaire ou ramifié saturé ou insaturé, ou un radical aryle, aralkyle ou alkylaryle ayant 1 à 16 atomes de carbone, et deux radicaux R peuvent être combinés l'un avec l'autre par le biais d'un pont alkylène,
R¹ représente R, SiR₃ ou un radical amide de formule (II) : 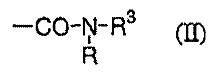
R² est identique à R ou représente H, où - pour autant que R¹ ne soit pas un radical amide - R² peut être combiné avec R¹ par le biais d'un pont alkylène,
R³ est identique à R ou représente SiR₃, et
X^{⊕} représente un cation organique onium de formule générale (III) : 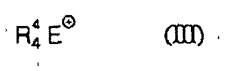
dans laquelle :
E représente un atome d'azote ou de phosphore, et
R⁴ représente des radicaux aliphatiques, cycloaliphatiques ou araliphatiques linéaires ou ramifiés, identiques ou différents, ayant 1 à 20 atomes de carbone.

13. Procédé selon la revendication 12, **caractérisé en ce que** l'on utilise des monoisocyanates, diisocyanates ou polyisocyanates aliphatiques, cycloaliphatiques, araliphatiques ou aromatiques.

14. Procédé selon la revendication 13, **caractérisé en ce que** l'on utilise les composés suivants : diisocyanates de cyclohexane, diisocyanates de méthylcyclohexane, diisocyanates d'éthylcyclohexane, diisocyanates de propylcyclohexane, diisocyanates de méthyldiéthylcyclohexane, diisocyanates de phénylène, diisocyanates de tolyulène, bis(isocyanatophényl)méthane, diisocyanates de propane, diisocyanates de butane, diisocyanates de pentane, diisocyanates d'hexane, tels que le diisocyanate d'hexaméthylène (HDI) ou le 1,5-diisocyanato-2-méthylpentane (MPDI), diisocyanates d'heptane, diisocyanates d'octane, diisocyanates de nonane, tels que le 1,6-diisocyanato-2,4, 4-triméthylhexane et le 1,6-diisocyanato-2,2,4-triméthylhexane (TMDI), triisocyanates de nonane, tels que le 4-isocyanatométhyl-1,8-octanediisocyanate (TIN), diisocyanates et triisocyanates de décane, diisocyanates et triisocyanates d'undécane, diisocyanates et triisocyanates de dodécane, diisocyanate d'isophorone (IPDI), bis(isocyanatométhylcyclohexyl) méthane (H₁₂MDI), isocyanatométhylméthylcyclohexyleisocyanates, 2,5(2,6)-bis-(isocyanatométhyl)bicyclo[2.2.1]heptane (NBDI), 1,3-bis(isocyanatométhyl)cyclohexane (1,3-H₆-XDI) ou 1,4-bis(isocyanatométhyl)cyclohexane (1,4-H₆-XDI).

15. Procédé selon la revendication 13, **caractérisé en ce que** l'on utilise les composés HDI, IPDI, MPDI, TMDI, 1,3- et 1,4-H₆-XDI, NBDI, ainsi que des mélanges d'HDI et d'IPDI.

16. Procédé selon la revendication 13, **caractérisé en ce que** l'on utilise des monoisocyanates choisis parmi les composés suivants : isocyanate d'éthyle, isocyanate de cyclohexyle, isocyanate de phényle, isocyanate de tolyle, isocyanate de benzyle, ainsi que tous les régioisomères et stéréoisomères des composés isocyanates de propyle, isocyanates d'hexyle, isocyanates d'octyle et isocyanates de méthoxypropyle.

17. Procédé selon au moins l'une quelconque des revendications 12 à 16, **caractérisé en ce que** la fabrication des polyisocyanates contenant des groupements isocyanurate est réalisée en continu ou en discontinu.

18. Procédé selon au moins l'une quelconque des revendications 12 à 17, **caractérisé en ce que** les catalyseurs sont utilisés en concentration comprise entre 0,01 et 5,0 % en poids.

19. Procédé selon au moins l'une quelconque des revendications 12 à 18, **caractérisé en ce que** la fabrication est réalisée en conditions isothermiques, dans une plage de températures comprises entre 0 °C et 100 °C, de préférence entre 20 °C et 80 °C.
